# EUROPEAN PATENT SPECIFICATION

(11) **EP 0 800 022 B1**
(45) Date of publication and mention of the grant of the patent: **17.07.2002**
(21) Application number: 96120388.2
(22) Date of filing: 18.12.1996
(51) Int. Cl.: F16H 61/06

(54) **Clutch pressure control during override of initial shift in an automatic transmission**
Kupplungsdrucksteuerung zur Übersteuerung der ursprünglichen Getriebegangwahl bei einem automatischen Getriebe
Système de régulation de la pression des embrayages pendant des changements de vitesses à priorité modifiée

(30) Priority: 04.04.1996 JP 8288196
(43) Date of publication of application: 08.10.1997
(73) Proprietor: AISIN AW CO., LTD., Anjo-shi Aichi-ken 444-11 (JP)
(72) Inventor: Tsuchiya, Saoto, Anjo-shi, Aichi-ken 444-11 (JP); Nishida, Masaaki, Anjo-shi, Aichi-ken 444-11 (JP); Yamamoto, Yoshihisa, Anjo-shi, Aichi-ken 444-11 (JP); Tsutsui, Hiroshi, Anjo-shi, Aichi-ken 444-11 (JP)
(74) Representative: VOSSIUS & PARTNER

(56) References cited:
- US-A- 4 955 257
- US-A- 5 014 573
- US-A- 5 138 906
- US-A- 5 285 880

## Description

The present invention relates to an automatic transmission mounted on a vehicle and, more particularly, to a speed change control apparatus wherein during a speed change operation, another speed change operation different therefrom is determined.

Generally, in a vehicle having an automatic transmission, during a speed change operation to a predetermined speed stage, a speed change to a speed stage different from the predetermined speed stage is sometimes determined. For example, during a speed change from a first speed to a second speed, a kick-down operation that an accelerator pedal is depressed suddenly sometimes dispatches an instruction to execute a speed change operation to the first speed.

Conventionally, as described in JP-A-61-48 651 for example, even if an up-shift instruction is entered during a down-shift operation, the up-shift operation is inhibited until the down-shift operation is terminated. As a result, a sufficient amount of oil is discharged from an accumulator of a high-speed stage frictional engagement unit. When the servo hydraulic pressure of the high-speed stage frictional engagement unit has decreased to a sufficiently low level, the up-shift operation is started, which prevents a large shock in speed change resulting from the resumption of oil supply to the accumulator before oil is completely discharged from the accumulator of the high-speed frictional engagement unit as in the case where the up-shift operation is started during the down-shift operation.

In US-A-4 955 257, a method for controlling a shift in an automatic transmission in accordance with the preamble of claim 1 is disclosed wherein it is detected whether a first shift, i.e., a rotational change, has been started when a second shift is detected. In case a second shift is detected during the first shift operation but before rotational change has been started, the first shift is discontinued. In the other case where a second shift is detected during the rotational change of the first shift operation, the first shift is completed before the second shift is started.

However, according to the prior art described above, since the up-shift operation (second speed change) is inhibited until the down-shift operation (first speed change) is terminated, there is a long time span required between the start of the down-shift and the termination of the up-shift.

Accordingly, an object of the present invention is to provide an automatic transmission control apparatus capable of preventing a shock in speed change and reducing the time required to execute the speed change even if the second speed change is determined during the first speed change operation as described above. This object is achieved with the features of the claims 1 to 7.

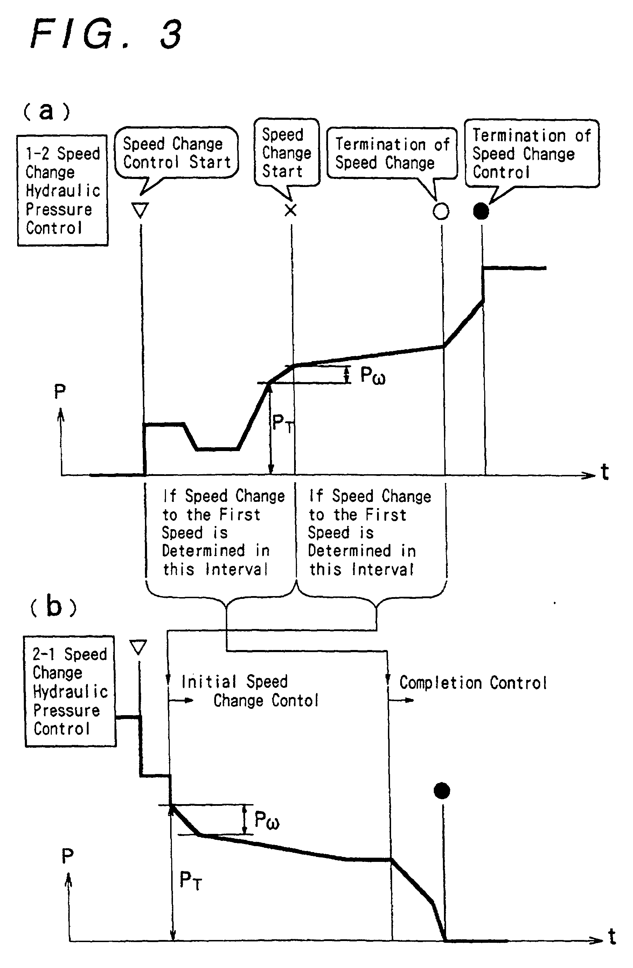

If the second speed change is determined during the first speed change operation according to the above-described construction, for example, if a down-shift to the first speed stage is determined during an up-shift operation from the first to the second speed, the hydraulic pressure in the second speed change operation is controlled depending on the speed change state of the first speed change operation at the time of determination of the second speed change. For example, if a down-shift to the first speed stage is determined during an up-shift operation from the first to the second speed as shown in Fig. 3, before a speed change which causes a change in rotation of the input shaft is started (e.g. torque phase), only completion control for that down-shift is executed. If a down-shift to the first speed stage is determined after the speed change is started (e.g. inertia phase), hydraulic pressure control is executed from the initial speed change control of that down-shift.

According to claim 1 of the present invention, since the hydraulic pressure control for the second speed change is executed depending on the speed change state of the first speed change operation at the time of determination of the second speed change, there is no need to wait until the first speed change operation is terminated, thus reducing the time required to execute the entire speed change operation. Also, appropriate hydraulic pressure control can be always performed depending on the speed change state.

According to claim 2 of the present invention, since there is no change in rotation of the input shaft before the first speed change operation causes a change in rotation of the input shaft (namely, in torque phase), any sudden change in torque can be avoided by sweep-controlling the hydraulic pressure at a predetermined gradient. On the other hand, when there is a change in rotation of the input shaft (namely, in inertia phase), an excellent speed change characteristic can be obtained by controlling the hydraulic pressure to bring the change in rotation of the input shaft to a predetermined value.

According to claim 3 of the present invention, since operation is shifted to a predetermined hydraulic pressure control stage for the second speed change depending on the hydraulic pressure control stage for the first speed change operation at the time of determination of the second speed change, a control logic for multi-speed-change becomes unnecessary, thus reducing the memory capacitance of the control unit. Therefore, it is possible to reduce costs and improve the overall reliability.

According to claim 4 of the present invention, the predetermined change in rotation in the second speed change operation is set based on the target rotation change in the first speed change operation. Thus, hydraulic pressure control in the second speed change operation can be executed appropriately based on the target rotation change in the first speed change operation, although detection by the sensors may not be performed immediately or precisely due to a transient state generated during the second speed change operation in which there is a change in the rotation.

According to claim 5 of the present invention, it is possible to cause a change in rotation between the first speed change operation and the second speed change without delay by setting the hydraulic pressure necessary to cause a change in rotation in the second speed change operation. Therefore, the time required to execute the entire speed change operation is reduced.

According to claim 6 of the present invention, it is possible to prevent any response delay in the hydraulic control by making corrections using the difference between the throttle opening degrees based on the input torque in the first speed change operation, although direct estimation of the input torque during the second speed change operation, which is likely to cause a response delay in the hydraulic control, is undesirable due to the fact that estimation of engine torque when there is a change in rotation brings about a time delay in an attempt to detect the engine rotation precisely because the engine is in a transient state.

According to claim 7 of the present invention, if the throttle opening is returned at the time of determination of the second speed change closer to the value at the time of the first speed change operation, a correction torque is set to a relatively small value. Therefore, any shock during the speed change resulting from an excessively lowered hydraulic pressure can be avoided.

Fig. 1 shows an automatic transmission control apparatus to which the present invention can be applied. Fig. 1(a) shows an electronic control device and Fig. 1(b) shows a hydraulic control unit.

Fig. 2 is a flow chart related to the present invention. Fig. 2(a) shows an up-shift operation from the first to the second speed and Fig. 2(b) shows a down-shift operation from the second to the first speed.

Fig. 3 is a time chart related to a hydraulic pressure control of the present invention. Fig. 3(a) shows the up-shift operation from the first to the second speed and Fig. 3(b) shows the down-shift operation from the second to the first speed.

Fig. 4 is a time chart related to the hydraulic pressure control in a case where a speed change to the first speed stage is determined in a torque phase during a speed change operation from the first to the second speed.

Fig. 5 is a time chart related to the hydraulic pressure control in a case where the speed change to the first speed stage is determined in an inertia phase during the speed change operation from the first to the second speed.

Fig. 6 is a time chart related to the hydraulic pressure control in a case where the speed change to the first speed stage is determined after the speed change from the first to the second speed has been terminated.

Fig. 7 shows correction of an input torque. Fig. 7(a) is a diagram showing a correction value of the input torque obtained from a throttle opening degree during the speed change operation from the first to the second speed and a throttle opening degree at the time when the speed change to the first speed stage is determined. Fig. 7(b) shows a change in the correction value due to a difference between both the throttle opening degrees.

Fig. 8(a) is a diagram showing a change in an engagement hydraulic pressure P_{T} of a frictional engagement element in accordance with an input (turbine) torque T_{T}.

Fig. 8(b) is a diagram showing a hydraulic pressure change rate Pω necessary for generating a target rotation change rate ω'.

Hereinafter, an embodiment of the present invention, which is particularly applicable to a multi-speed-change wherein an instruction is given to execute a down-shift to the first speed during an up-shift operation from the first to the second speed. will be described with reference to the accompanying drawings.

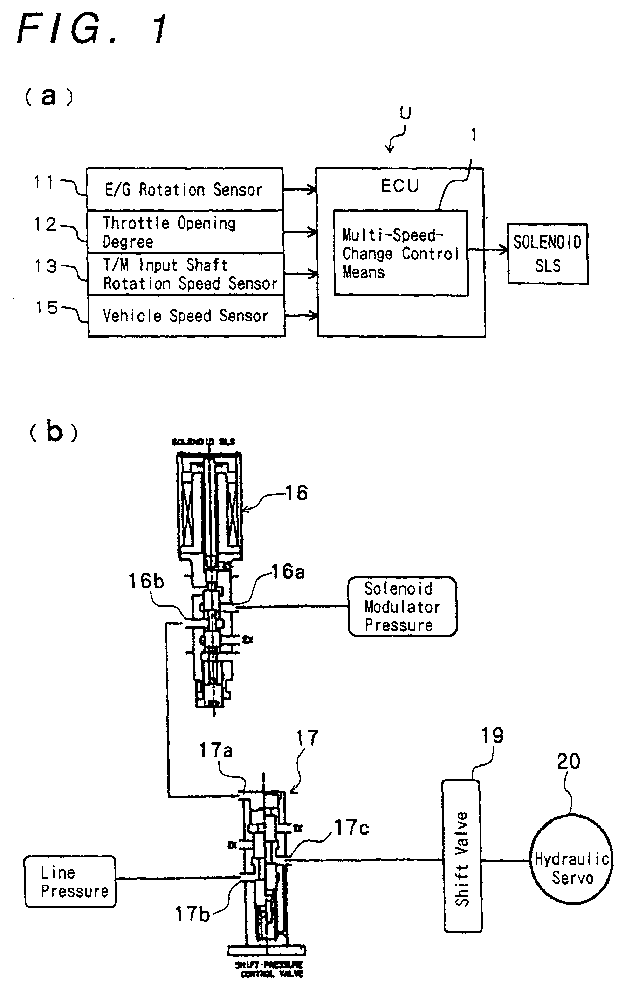

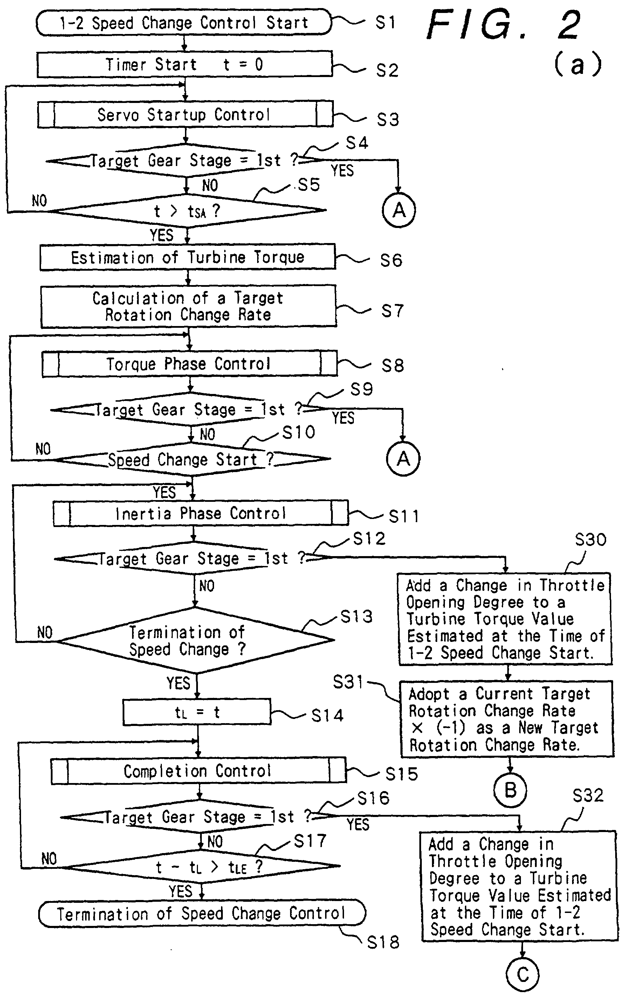

Fig. 1 is a schematic diagram showing an automatic transmission control apparatus, to which the present invention can be applied. According to this present embodiment, electric signals from an engine rotation sensor 11, a throttle opening degree sensor 12, an automatic transmission input rotation (turbine rotation) sensor 13, and a vehicle speed (output rotation) sensor 15 are supplied to an electronic control unit U. The electronic control unit U includes a multi-speed-change control means 1, which conducts arithmetic operation and outputs a result thereof to a linear solenoid valve 16.

The linear solenoid valve 16 constitutes a hydraulic control means. Based on a current value (hydraulic control signal) from the electronic control unit U, the hydraulic control means adjusts a solenoid modulator pressure supplied to an input port 16a and outputs the adjusted pressure to an output port 16b, so that the adjusted hydraulic pressure is applied to a control hydraulic chamber of a shift pressure control valve 17. Based on a hydraulic pressure of the control hydraulic chamber 17a, the shift pressure control valve 17 controls a line pressure of an input port 17b and outputs the controlled line pressure to an output port 17c. Then, the controlled hydraulic pressure is applied to a hydraulic pressure servo 20 which operates a predetermined clutch or brake through a predetermined shift valve 19.

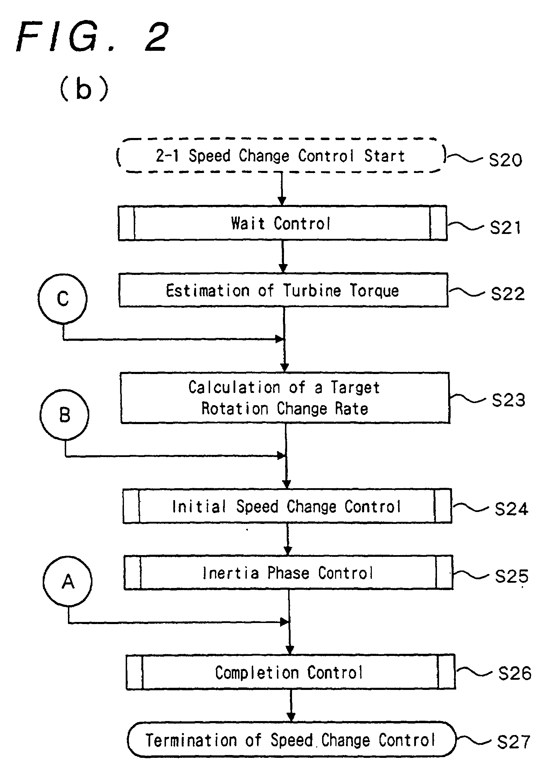

With reference to a flow chart and a time chart as shown in Figs. 2 and 3 respectively, hydraulic pressure control for the up-shift from the first to the second speed and the down-shift from the second to the first speed will be explained.

First, the up-shift operation as shown in Fig. 2(a) and Fig. 3(a) will be explained. If an instruction to execute speed change from the first to the second speed is given (S1) (start of speed change control), first, a timer starts counting (S2) and then servo startup control is executed (S3). If a target gear stage is not the first speed (S4), the aforementioned servo startup control is continued for a predetermined time tSA (S5), so that a predetermined hydraulic pressure is supplied to the hydraulic pressure servo 20 for a frictional engagement element (e.g. second brake B2) to be engaged at the time of the second speed and a hydraulic pressure chamber in the hydraulic pressure servo on the engagement side is filled with oil.

Then, the engagement hydraulic pressure is maintained at a predetermined value which is higher than a piston stroke pressure and causes no change in rotation of the input shaft and after that, a turbine (input) torque is estimated (S6). The turbine torque is obtained by finding an engine torque from a map on the basis of a throttle opening degree and an engine rotation, calculating a speed ratio based on the Input/Output rotations of a torque converter, finding a torque ratio from the speed ratio based on the map, and multiplying the engine torque by the torque ratio. Furthermore, a target rotation change ratio (target rotational acceleration) ω', which is set for the time when the rotation of the input shaft is initially changed, is calculated. (S7).

Next, torque phase control is executed (S8). That is, based on a target engagement hydraulic pressure P_{T} just before (just before the inertia phase) a change in the input rotation calculated on the basis of the aforementioned turbine torque and a gradient (first sweep angle) fixed by a predetermined length of time, the value is swept upward. Furthermore, after it reaches the engagement (target) hydraulic pressure P_{T}, it is swept upward at a sweep angle gentler than the first sweep angle due to the hydraulic pressure Pω calculated from the above-mentioned target rotation change ratio ω'. Then, the second sweep-upward operation is continued until a change in rotation of the input shaft reaches a reference value for determining the start of the speed change, which can de detected by the input shaft rotation sensor 13. Accordingly, when the hydraulic pressure Pω (second sweep-upward amount) corresponding to the inertia phase torque calculated from the target rotation change ratio is exhausted, the speed change operation is started. In general, at that point of time, the inputted engine torque is well balanced with a load as a vehicle driving force determined by the torque capacitance of the frictional engagement element on the engagement side. Until such start of the speed change operation is determined, the frictional engagement element on the engagement side is in a slipped state, which is referred to as a torque phase, causing no change in rotation but in torque distribution ratio. After that, the torque capacitance of the above-mentioned frictional engagement element increases and eventually surpasses the engine torque, establishing the inertia phase in which the engine rotation starts to decrease (the rotation of the input shaft changes).

Furthermore, whether the target gear stage is the first speed is judged again (S9). After the aforementioned start of speed change is determined (S10), inertia phase control is conducted (S11). In the inertia phase control, subsequent to the target rotation speed change ratio ω', a value detected by the input shaft rotation speed sensor 13 is monitored and feedback-controlled so that the rotation speed of the input shaft is subjected to a predetermined target rotation change. Then, during the inertia phase control, whether or not the target gear stage is the first speed is judged again (S12). The inertia phase control is continued until the speed change operation is terminated (S13). When the timer counts a predetermined time interval t_{L} (S14), completion control is conducted (S15). Furthermore, whether or not the target gear stage is the first speed is judged again (S16). If the timer counts a predetermined time interval t_{LE} after the aforementioned termination of the speed change operation (S17), the speed change control is terminated (S18). The servo startup control (S3), torque phase control (S8), inertia phase control (S11) and completion control (S15) constitute a plurality of hydraulic control stages in the up-shift operation (first speed change).

The hydraulic pressure on the engagement side increases gradually so that the torque capacitance of the frictional engagement elements increases. When the difference in rotation speed between the input and output sides of each frictional engagement element is eliminated, the speed change is terminated. Furthermore, a slightly remaining stroke of a cushioning spring of each frictional engagement element on the engagement side is compressed such that the hydraulic pressure of the hydraulic pressure servo on the engagement side becomes equal to a line pressure. Then, the speed change control is terminated.

On the other hand, the down-shift operation from the second speed to the first speed is conducted as shown in Figs. 2(b) and 3(b). First, based on the determination that the speed change from the second to the first speed should be executed, the speed change control is started (S20). Then, wait control is conducted (S21). As a result, the pressure in the hydraulic servo 20 for the frictional engagement elements being engaged in the second speed state is reduced by a predetermined pressure from the line pressure, upon start of the speed change control (speed change instruction).

Then, after a predetermined time has lapsed, a turbine torque is estimated as mentioned above (S22), a target rotation speed change rate is calculated (S23), and initial speed change control is executed (S24). Consequently, the hydraulic pressure is reduced to a predetermined engagement hydraulic pressure P_{T} calculated based on an input (turbine) torque, namely, an engagement hydraulic pressure P_{T} immediately before the rotation of the input shaft starts to change, so that the initial speed change control state is achieved. Furthermore, as described earlier, the pressure is swept down from the predetermined engagement hydraulic pressure P_{T} based on the change in hydraulic pressure Pω calculated from the target rotation change rate ω' when the rotation of the input shaft has started to change.

Then, due to the sweep-down operation, the inertia phase is achieved so that the engine rotation speed increases. Then, the inertia phase control is executed based on a change in the input shaft rotation speed, to decrease the hydraulic pressure gently (S25). The gradient in the inertia phase control is determined based on the target change in rotation speed of the input shaft as calculated during the aforementioned up-shift operation. Then, when the engine rotation speed increases to reach the first speed level of the automatic transmission, the speed change is terminated. Thereafter, the draining operation is conducted until the hydraulic pressure becomes zero, and the speed change control is terminated. Then, after the speed change is terminated, completion control is executed (S26) and the speed change control is terminated (S27). The wait control (S21), the initial speed change control (S24), and the completion control (S25) constitute a plurality of hydraulic pressure control stages during the down-shift operation (second speed change).

If an instruction to execute the down-shift operation from the second to the first speed is determined during the up-shift operation from the first to the second speed, before speed change is started, that is, prior to the inertia phase in which a speed change occurs in the input shaft, the down-shift operation is started with the aforementioned completion control. If the down-shift instruction is determined after the speed change has been started, that is, after the inertia phase, the down-shift operation is started with the aforementioned initial speed change control.

Concretely, in the flow chart as shown in Fig. 2(a), if it is judged (S4) that the target gear stage during the servo startup control (S3) is the first speed stage and (S9) that the target gear stage during the torque phase control (s8) is also the first speed stage, that is, if an instruction to execute the down-shift operation to the first speed is determined before the speed change from the first to second speed is started (that is, prior to the inertia phase), the down-shift control is started with the completion control as shown in Fig. 2(b).

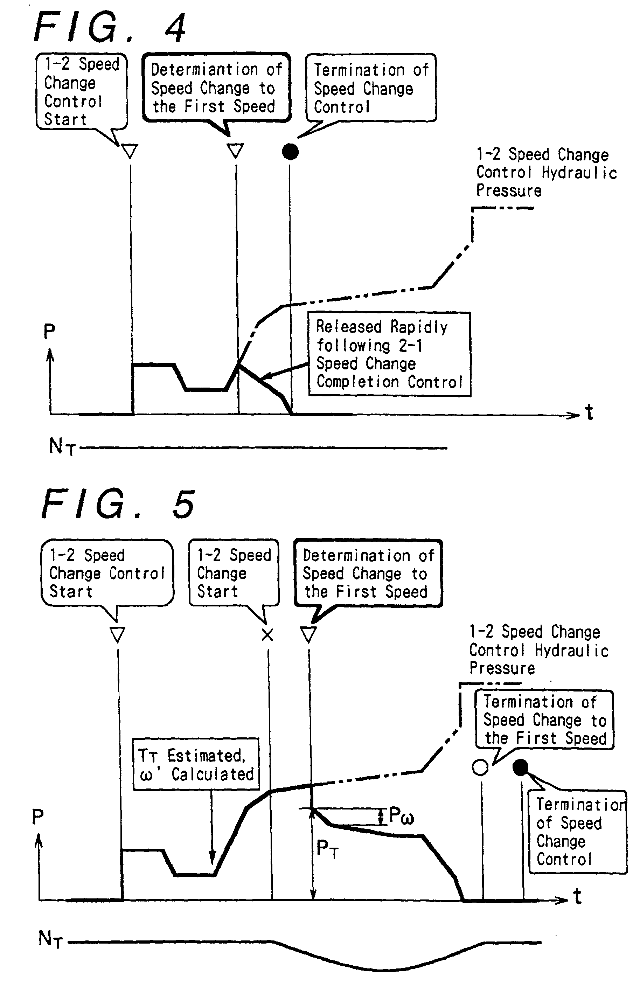

That is, if a speed change to the first speed is determined during the first sweep-up (torque phase) based on the target engagement hydraulic pressure P_{T} as shown in Fig. 4, the hydraulic pressure in the hydraulic servo 20 is swept down immediately after the aforementioned determination with a predetermined gradient following the completion control of the speed change from the second to the first speed, and then released rapidly. In this state, there is no change in the rotation speed N_{T} of the input shaft (turbine).

If it is judged (S12) that the target gear stage during the inertia phase control (S11) is the first speed stage in the flow chart as shown in Fig. 2(a), the turbine torque value estimated when the speed change from the first to second speed is started, is corrected in consideration of the throttle opening degree so as to estimate again a turbine torque (S30). Then, the current target rotation change rate (see S7) calculated prior to the start of the speed change from the first to the second speed is multiplied by -1 so as to obtain a new target rotation change rate(S31).

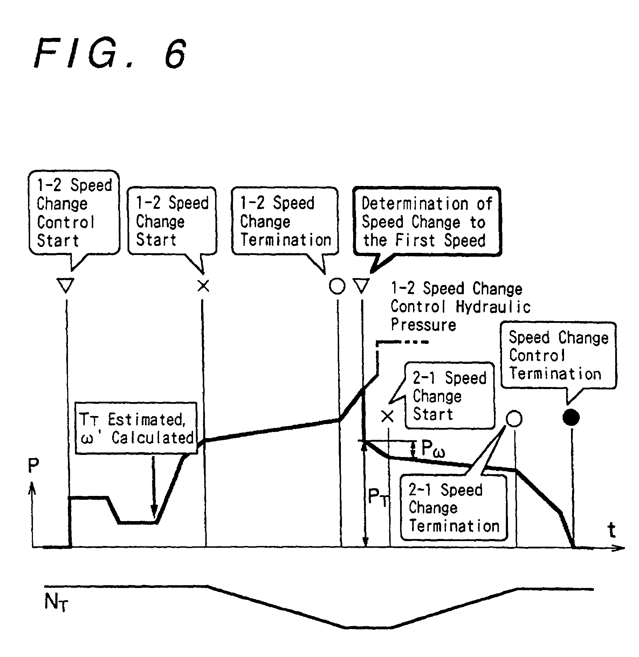

That is, if the down-shift operation to the first speed is determined, as shown in Fig. 5, after the speed change from the first to the second speed has been started during the speed change operation from the first to the second speed, that is, if the down-shift operation to the first speed is determined during the inertia phase control, the down-shift operation is started with the initial speed change control, using the change in hydraulic pressure Pω required to obtain the engagement hydraulic pressure P_{T} resulting from the turbine torque estimated at the time of determination of the aforementioned down-shift operation and the target rotation change rate, based on the turbine torque (see S6) estimated prior to the start of the torque phase control and the target rotation change rate (see S7). In the down-shift operation to the first speed stage during the speed change from the first to the second speed, the input shaft (turbine) rotation N_{T} decreases temporarily due to the aforementioned speed change. After speed change to the first speed has been terminated, the original rotation is regained.

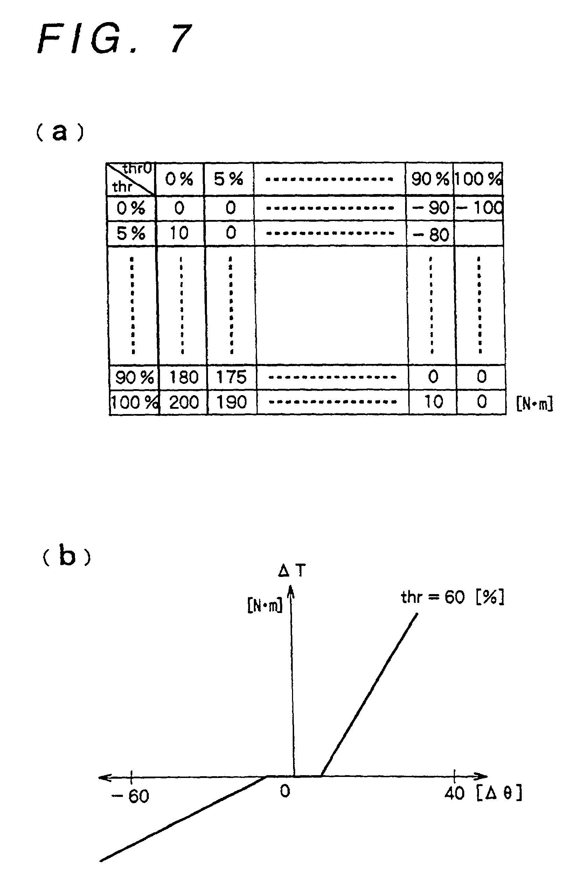

In the above-mentioned step S30, the correction of the turbine torque is made by estimating a difference between the turbine torque as obtained in step 6 and the current turbine torque. Such difference caused by the change in turbine torque is calculated from the throttle opening degree tho at the time of the aforementioned torque calculation and the current throttle opening degree thr, using a map as shown in Fig. 7(a). According to the map, as shown in Fig. 7(b), if a difference Δθ between both the throttle opening degrees is positive (in the right direction), that is, if the current throttle opening degree is larger than that as calculated at the time of the speed change from the first to the second speed (thr/tho), even for the same current throttle opening degree (e.g. thr = 60[%]), a turbine torque correction amount ΔT is set to a relatively large value. If the difference Δθ between both the throttle opening degrees is negative (tho>thr), the turbine torque correction amount ΔT is set to a relatively small value. This prevents a shock in speed change which may be caused if the down-shift operation is advanced quickly due to over-reduction of hydraulic pressure in the case where the current throttle opening degree thr is brought back closer to the calculated throttle opening degree tho.

From the turbine torque obtained by correcting the turbine torque value in step S6, the target hydraulic pressure P_{T} is calculated. By multiplying the target rotation change obtained in step S8 by -1, the downward gradient is set to calculate the hydraulic pressure change rate Pω. Consequently, the down-shift operation is started with the initial speed change control. The reason for this will be described below. If there is a change in rotation speed upon estimation of the engine torque, it is difficult to detect the engine rotation precisely with no delay because the engine is in a transient state, that is, because a load resulting from a difference between an automatic transmission input torque determined by the torque capacitance of the frictional engagement elements and an actual engine torque is imposed on the engine (the state in which the engine is caused to rotate by the transmission). Similarly, another reason is that it is difficult to set a target rotation change at the time of initial change in the newly input rotation by detecting the speed change ratio of the automatic transmission in the transient state.

If the first speed stage is selected in determining the target gear stage (S16) during the completion control (S15) as shown in Fig. 2(a), like in the step S30, the turbine torque value estimated in step S6 is corrected in consideration of the aforementioned change in the throttle opening degree, to estimate a new turbine torque (S32). Based on the turbine torque value, the down-shift operation is started with the calculation of the target rotation change rate as shown in Fig. 2(b).

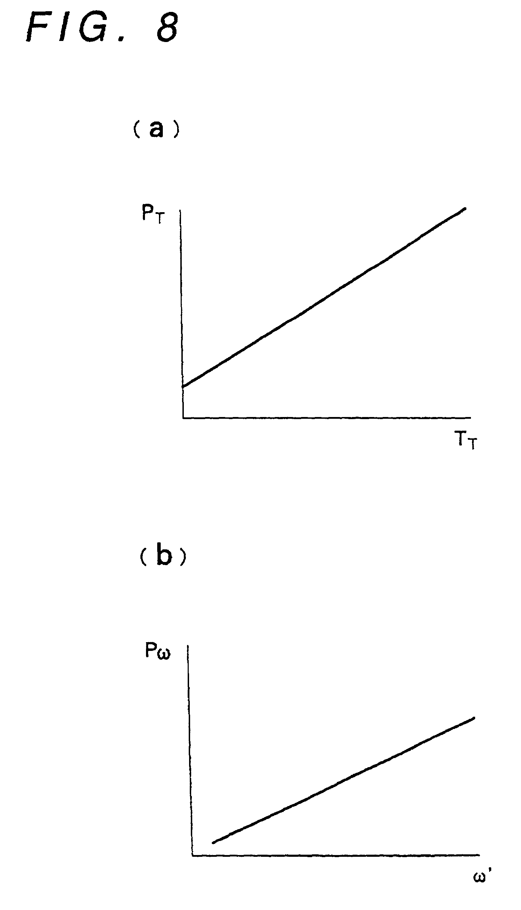

That is, based on a turbine torque T_{T} obtained by adding the above-mentioned corrected value to a turbine torque estimated prior to the start of the torque phase control as shown in Fig. 6, the engagement hydraulic pressure P_{T} is calculated as shown in Fig. 8(a). Also, based on the target rotation change rate ω' at this time, the hydraulic pressure change rate Pω is calculated as shown in Fig. 8(b). After the speed change from the first to the second speed is terminated, in response to the determination of the speed change to the first speed stage, the initial control of the down-shift operation is executed, using the engagement hydraulic pressure P_{T} and the hydraulic pressure change rate Pω. Subsequently, the speed change from the second to the first speed is started, and then the inertia control is executed so as to terminate the speed change from the second to the first speed. Then, the hydraulic pressure is released and the multi-speed-change control is terminated. If the speed change to the first speed stage is determined after the speed change from the first to the second speed has been terminated, as described previously, the input shaft (turbine) rotation speed N_{T} is changed based on the speed change from the first to the second speed and the speed change from the second to the first speed. Then, with the termination of the speed change from the second to the first speed, the original rotation speed is regained.

Although the multi-speed-change control in the case where the down-shift to the first speed stage is determined during the up-shift operation from the first to the second speed has been explained above, the same control may be executed also in the case where the down-shift is determined during other up-shift operations, for example, from the second to the third speed. Furthermore, the same control may be executed also in the case where the up-shift operation is determined by a manual operation or the like during the down-shift operation.

## Claims

1. An automatic transmission control apparatus comprising a control unit for receiving signals from respective sensors based on a vehicle running state and outputting a hydraulic pressure signal to hydraulic pressure control means for controlling a hydraulic pressure applied to a hydraulic pressure servo of a predetermined frictional engagement element, wherein said control unit has multi-speed-change control means for outputting said hydraulic pressure signal for a second speed change depending on the speed change state of a first speed change operation, **characterized in that** the first speed change is discontinued when the second speed change is determined during the rotational change for the first speed change operation based on the signals from said respective sensors.

2. An automatic transmission control apparatus according to claim 1, wherein said multi-speed-change control means sweeps hydraulic pressure at a predetermined gradient before said first speed change operation causes a change in rotation of an input shaft, and outputs said hydraulic pressure control signal to cause a predetermined change in the rotation of said input shaft when said first speed change operation causes said change in the rotation of said input shaft.

3. An automatic transmission control apparatus according to claim 1 or 2, wherein said first speed change operation includes a plurality of hydraulic pressure control stages, said second speed change operation includes a plurality of hydraulic pressure control stages, and said multi-speed-change control means sets the hydraulic pressure control stages of said second speed change operation in accordance with the hydraulic pressure control stages of said first speed change operation at the time of determination of said second speed change.

4. An automatic transmission control apparatus according to claim 2, wherein a predetermined change in rotation of said second speed change is set based on a target rotation change calculated in said first speed change operation.

5. An automatic transmission control apparatus according to claim 2, wherein an input torque at the time of determination of said second speed change is estimated, and said second speed change operation is started with a hydraulic pressure corresponding to said input torque.

6. An automatic transmission control apparatus according to claim 5 wherein said input torque at the time of determination of said second speed change is obtained by calculating a correction value from a difference between a throttle opening degree on which hydraulic pressure control in said first speed change operation is based and a throttle opening degree at the time of determination of said second speed change and then correcting an input torque on which hydraulic pressure control in said first speed change operation is based using said correction value.

7. An automatic transmission control apparatus according to claim 6, wherein when said throttle opening degree is smaller at the time of determination of said second speed change than at the time of said first speed change operation, said correction value is set so as to be smaller than when said throttle opening degree is larger at the time of determination of said second speed change than at the time of said first speed change operation.

## Patentansprüche

1. Steuervorrichtung für ein Automatikgetriebe, die eine Steuereinheit zum Empfang von Signalen von entsprechenden Sensoren auf der Basis eines Fahrzustands des Fahrzeugs und zur Ausgabe eines Hydraulikdrucksignals an eine Hydraulikdruck-Steuereinrichtung zur Steuerung eines Hydraulikdrucks aufweist, der an eine Hydraulikdruck-Servoeinrichtung eines vorgegebenen Reibschlußelements angelegt wird, wobei die Steuereinheit eine Mehrfachschaltsteuereinrichtung zur Ausgabe des Hydraülikdrucksignals für einen zweiten Schaltvorgang in Abhängigkeit vom Schaltzustand eines ersten Schaltvorgangs aufweist, **dadurch gekennzeichnet, daß** der erste Schaltvorgang unterbrochen wird, wenn aufgrund der Signale von den entsprechenden Sensoren der zweite Schaltvorgang während der Drehzahländerung für den ersten Schaltvorgang veranlaßt wird.

2. Steuervorrichtung für ein Automatikgetriebe nach Anspruch 1, wobei die Mehrfachschaltsteuereinrichtung den Hydraulikdruck mit einer vorgegebenen Steigung variiert, bevor der erste Schaltvorgang eine Drehzahländerung einer Antriebswelle verursacht, und das Hydraulikdruck-Steuersignal ausgibt, um eine vorgegebene Drehzahländerung der Antriebswelle herbeizuführen, wenn der erste Schaltvorgang die Drehzahländerung der Antriebswelle verursacht.

3. Steuervorrichtung für ein Automatikgetriebe nach Anspruch 1 oder 2, wobei der erste Schaltvorgang mehrere Hydraulikdrucksteuerungsphasen einschließt, wobei der zweite Schaltvorgang mehrere Hydraulikdrucksteuerungsphasen einschließt, und wobei die Mehrfachschaltsteuereinrichtung die Hydraulikdrucksteuerungsphasen des zweiten Schaltvorgangs entsprechend den Hydraulikdrucksteuerungsphasen des ersten Schaltvorgangs zu dem Zeitpunkt einstellt, in dem der zweite Schaltvorgang veranlaßt wird.

4. Steuervorrichtung für ein Automatikgetriebe nach Anspruch 2, wobei auf der Basis einer im ersten Schaltvorgang berechneten Zieldrehzahländerung eine vorgegebene Drehzahländerung des zweiten Schaltvorgangs eingestellt wird.

5. Steuervorrichtung für ein Automatikgetriebe nach Anspruch 2, wobei zu dem Zeitpunkt, in dem der zweite Schaltvorgang veranlaßt wird, ein Antriebsdrehmoment abgeschätzt wird, und wobei der zweite Schaltvorgang mit einem Hydraulikdruck gestartet wird, der dem Antriebsdrehmoment entspricht.

6. Steuervorrichtung für ein Automatikgetriebe nach Anspruch 5, wobei das Antriebsdrehmoment zu dem Zeitpunkt, in dem der zweite Schaltvorgang veranlaßt wird, durch Berechnen eines Korrekturwertes aus einer Differenz zwischen einem Drosselklappenöffnungsgrad, auf dem die Hydraulikdrucksteuerung in dem ersten Schaltvorgang basiert, und einem Drosselklappenöffnungsgrad zu dem Zeitpunkt, in dem der zweite Schaltvorgang veranlaßt wird, und anschließende Korrektur eines Antriebsdrehmoments, auf dem die Hydraulikdrucksteuerung im ersten Schaltvorgang basiert, unter Verwendung des Korrekturwertes ermittelt wird.

7. Steuervorrichtung für ein Automatikgetriebe nach Anspruch 6, wobei, wenn der Drosselklappenöffnungsgrad zu dem Zeitpunkt, in dem der zweite Schaltvorgang veranlaßt wird, kleiner ist als während des ersten Schaltvorgangs, ein kleinerer Korrekturwert eingestellt wird als in dem Fall, wo der Drosselkläppenöffnungsgrad zu dem Zeitpunkt, in dem der zweite Schaltvorgang veranlaßt wird, größer ist als während des ersten Schaltvorgangs.

## Revendications

1. Dispositif de commande de transmission automatique comprenant une unité de commande destinée à recevoir des signaux de capteurs respectifs en fonction d'un état de marche d'un véhicule et envoyant un signal de pression hydraulique à des moyens de commande de pression hydraulique pour commander une pression hydraulique appliquée à un servomoteur à pression hydraulique d'un élément d'engagement à friction prédéterminé, dans lequel ladite unité de commande a des moyens de commande de changement de vitesse multiple pour sortir ledit signal de pression hydraulique pour un second changement de vitesse en fonction de l'état de changement de vitesse d'une première opération de changement de vitesse, **caractérisé en ce que** le premier changement de vitesse est interrompu lorsque le second changement de vitesse est déterminé pendant le changement de vitesse de rotation pour la première opération de changement de vitesse en fonction des signaux provenant desdits détecteurs respectifs.

2. Dispositif de commande de transmission automatique selon la revendication 1, dans lequel lesdits moyens de commande de changement de vitesse multiple font varier la pression hydraulique avec un gradient prédéterminé avant que ladite première opération de changement de vitesse provoque un changement de vitesse de rotation d'un arbre d'entrée, et sort ledit signal de commande de pression hydraulique pour provoquer un changement prédéterminé de la vitesse de rotation dudit arbre d'entrée lorsque ladite première opération de changement de vitesse provoque ledit changement de vitesse de rotation dudit arbre d'entrée.

3. Dispositif de commande de transmission automatique seton la revendication 1 ou 2, dans lequel ladite première opération de changement de vitesse comprend une pluralité d'étages de commande de pression hydraulique, ladite seconde opération de changement de vitesse comprend une pluralité d'étages de commande de pression hydraulique, et lesdits moyens de commande de changement de vitesse multiple règlent les étages de commande de pression hydraulique de ladite seconde opération de changement de vitesse en conformité avec les étages de commande de pression hydraulique de ladite première opération de changement de vitesse à l'instant de détermination dudit second changement de vitesse.

4. Dispositif de commande de transmission automatique selon la revendication 2, dans lequel un changement prédéterminé de la vitesse de rotation dudit second changement de vitesse est réglé en fonction d'un changement de vitesse de rotation cible calculé dans ladite première opération de changement de vitesse.

5. Dispositif de commande de transmission automatique selon la revendication 2, dans lequel un couple d'entrée à l'instant de détermination dudit second changement de vitesse est estimé, et ladite seconde opération de changement de vitesse est démarrée avec une pression hydraulique correspondant audit couple d'entrée.

6. Dispositif de commande de transmission automatique selon la revendication 5, dans lequel ledit couple d'entrée à l'instant de détermination dudit second changement de vitesse est obtenu en calculant une valeur de correction à partir d'une différence entre un degré d'ouverture de papillon sur lequel est basée la commande de pression hydraulique dans ladite première opération de changement de vitesse et un degré d'ouverture de papillon à l'instant de détermination dudit second changement de vitesse et puis en corrigeant un couple d'entrée sur lequel est basée la commande de pression hydraulique dans ladite première opération de changement de vitesse en utilisant ladite valeur de correction.

7. Dispositif de commande de transmission automatique selon la revendication 6, dans lequel, lorsque ledit degré d'ouverture de papillon est plus petit à l'instant de détermination dudit second changement de vitesse qu'à l'instant de ladite première opération de changement de vitesse, ladite valeur de correction est fixée de manière à être plus petite que lorsque ledit degré d'ouverture de papillon est plus grand à l'instant de détermination dudit second changement de vitesse qu'à l'instant de ladite première opération de changement de vitesse.
